# FASCICULE DE BREVET EUROPEEN

(11) **EP 2 625 052 B1**
(45) Date de publication et mention de la délivrance du brevet: **15.07.2015**
(21) Numéro de dépôt: 11779794.4
(22) Date de dépôt: 04.10.2011
(51) Int. Cl.: B60H 1/00, B60K 1/00, B60L 1/00

(54) **DISPOSITIF DE RÉGULATION THERMIQUE DE L'HABITACLE D'UN VÉHICULE AUTOMOBILE**
VORRICHTUNG ZUR TEMPERATURREGELUNG DES INSASSENRAUMS EINES KRAFTFAHRZEUGES
DEVICE FOR CONTROLLING THE TEMPERATURE OF THE PASSENGER COMPARTMENT OF A MOTOR VEHICLE

(30) Priorité: 04.10.2010 FR 1058018
(43) Date de publication de la demande: 14.08.2013
(73) Titulaire: Renault S.A.S., 92100 Boulogne-Billancourt (FR)
(72) Inventeur: ARCHER, Pascal, F-92400 Courbevoie (FR); GIBERT, Joan, F-91470 Les Molières (FR); WALLECAN, Claude, 27480 Lyons-la-Forêt (FR); CLAEYS, Philippe, F-92310 Sevres (FR)
(86) Numéro de dépôt international: PCT/FR2011/052313
(87) Numéro de publication internationale: WO 2012/045975

(56) Documents cités:
- EP-A1- 1 302 731
- EP-A1- 1 329 344
- FR-A1- 2 780 490
- FR-A1- 2 850 060

## Description

La présente invention concerne un dispositif de régulation thermique de l'habitacle d'un véhicule automobile, notamment de type électrique ou hybride, comme divulgué dans EP 1 329 344 A1.

Comme pour les véhicules automobiles à moteur thermique, les véhicules automobiles électriques ou hybrides doivent intégrer un système de conditionnement en température de l'air de l'habitacle. Ces systèmes de conditionnement permettent d'assurer le confort des passagers ainsi que des fonctions supplémentaires telles que le désembuage et le dégivrage des surfaces vitrées.

Toutefois, le fonctionnement des systèmes de conditionnement de véhicules thermiques nécessite une quantité d'énergie qui est incompatible avec celle disponible dans les véhicules électriques, ou même hybrides, dans la mesure où dans ces derniers, le moteur thermique peut être arrêté sur des durées importantes.

Par ailleurs, dans les véhicules électriques ou hybrides, il est souhaitable de conditionner en température le moteur électrique ainsi que son dispositif de pilotage, et idéalement de valoriser au mieux les calories dissipées par ces organes.

Les solutions actuelles, mises en oeuvre dans les véhicules à moteur thermique, conduiraient à utiliser des éléments résistifs à coefficient de température positif (CTP) ou un brûleur de carburant pour produire de l'énergie thermique, et un système de climatisation conventionnel pour produire de l'air frais dans l'habitacle. Cependant, un brûleur de carburant présente les inconvénients d'être polluant, bruyant et de nécessiter un remplissage en carburant, tandis que les éléments CTP ou les systèmes de climatisation conventionnels sont consommateurs d'électricité. De plus, les systèmes de chauffage/refroidissement sont dissociés et ne fonctionnent qu'une partie de l'année, ce qui implique un coût important et une modification du comportement conducteur, que ce soit en hiver (avec le remplissage en carburant) ou l'été (avec la diminution de l'autonomie du véhicule).

Il existe actuellement des dispositifs de régulation de la température de l'habitacle permettant d'assurer les fonctions de chauffage et de climatisation, tels que ceux décrits par exemple dans les documents EP 1 302 731 ou bien encore FR 2 850 060. Cependant, ces systèmes restent consommateurs d'énergie, et diminuent donc l'autonomie du véhicule.

Un but de l'invention est d'améliorer la régulation thermique de l'habitacle d'un véhicule automobile, notamment en terme de consommation d'énergie. Un autre but est de proposer un dispositif capable également de réguler la température d'un moteur électrique de manière à augmenter son rendement et sa durée de vie.

A cet effet, dans un mode de réalisation, il est proposé un dispositif de régulation thermique de l'habitacle d'un véhicule automobile entraîné notamment par un moteur électrique. Le dispositif comprend :
- un circuit de pompe à chaleur réversible,
- un circuit de refroidissement avec circulation d'un fluide caloporteur, comportant un moyen d'échange thermique avec le moteur électrique, et
- un moyen de couplage thermique entre le circuit de pompe à chaleur et le circuit de refroidissement.

De plus, le circuit de pompe à chaleur réversible est connecté thermiquement à un échangeur avec un flux d'air destiné à entrer dans l'habitacle.

Le dispositif utilise ainsi l'air de l'habitacle comme source chaude (ou froide selon la configuration) de la pompe à chaleur réversible. On augmente alors le rendement du dispositif par rapport à ceux de l'art antérieur. Par ailleurs, il est possible, avec le dispositif, de fournir de l'air chaud ou de l'air frais avec un système unique, ce qui limite les coûts et la maintenance.

Préférentiellement, le dispositif comprend au moins une conduite montée sur le circuit de refroidissement, en parallèle du moyen de couplage et comprend au moins un échangeur thermique avec le flux d'air destiné à entrer dans l'habitacle.

Le circuit de refroidissement comprend également un moyen de distribution capable d'alimenter simultanément et/ou successivement, dans le sens de circulation du fluide caloporteur, le moyen d'échange thermique et le moyen de couplage thermique.

Grâce au moyen de distribution, il devient plus facile de gérer l'énergie thermique transportée par le circuit de pompe à chaleur et le circuit de refroidissement. On augmente ainsi le rendement du dispositif en adaptant les échanges de chaleur entre les deux circuits selon les besoins.

Selon un premier mode de réalisation, le moyen d'échange thermique est monté sur une conduite reliée au circuit de refroidissement par un premier branchement en amont du moyen de couplage thermique et par un deuxième branchement en aval du moyen de couplage thermique, et dans lequel le moyen de distribution comprend une conduite de dérivation montée, notamment par deux vannes trois voies, d'une part entre le moyen d'échange thermique et le deuxième branchement, et d'autre part entre le premier branchement et le moyen de couplage thermique.

Dans ce mode de réalisation, le moyen d'échange thermique et le moyen de couplage sont montés en parallèle sur lé circuit de refroidissement. Cependant, un moyen de distribution permet de modifier la circulation du fluide caloporteur de manière à ce que le moyen d'échange thermique et le moyen de couplage soient traversés successivement par le fluide caloporteur.

Selon ce mode de réalisation, le moyen de distribution comprend :
- une première vanne munie d'une première voie raccordée à la sortie du moyen d'échange thermique, une deuxième voie raccordée au deuxième branchement et une troisième voie raccordée à la conduite de dérivation, et
- une deuxième vanne munie d'une première voie raccordée à l'entrée du moyen de couplage thermique, une deuxième voie raccordée au premier branchement et une troisième voie raccordée à la conduite de dérivation.

Selon un deuxième mode de réalisation, le moyen d'échange thermique est monté en amont du moyen de couplage thermique, et dans lequel le moyen de distribution comprend une première conduite de dérivation montée sur le circuit de refroidissement par un premier branchement en amont du moyen de couplage thermique et par un deuxième branchement en aval du moyen de couplage thermique.

Par ailleurs, le moyen de distribution peut également comprendre une deuxième conduite de dérivation montée sur le circuit de refroidissement par un premier branchement en amont du moyen d'échange thermique, et par un deuxième branchement entre le premier branchement de la première conduite et le moyen de couplage thermique.

Dans ce mode de réalisation, le moyen d'échange thermique et le moyen de couplage sont montés en série sur le circuit de refroidissement. Cependant, un moyen de distribution comprend des conduites de dérivation permettant d'alimenter simultanément le moyen d'échange thermique et le moyen de couplage par le fluide caloporteur.

Selon ce mode de réalisation, le moyen de distribution comprend :
- une première vanne deux voies montée sur la première conduite de dérivation, et
- une deuxième vanne munie d'une première voie raccordée à la sortie du moyen d'échange thermique, une deuxième voie raccordée à l'entrée du moyen de couplage et une troisième voie raccordée à la deuxième conduite de dérivation.

Le circuit de pompe à chaleur réversible peut comprendre un échangeur avec le flux d'air destiné à entrer dans l'habitacle.

Dans ce cas, l'air est directement chauffé ou refroidi par le fluide frigorigène de la pompe à chaleur.

Le circuit de pompe à chaleur réversible peut également comprendre un deuxième moyen de couplage thermique avec un circuit de circulation comportant un échangeur avec le flux d'air destiné à entrer dans l'habitacle.

Dans ce cas, le fluide frigorigène de la pompe à chaleur permet de refroidir l'air destiné à entrer dans l'habitacle par l'intermédiaire d'une boucle de fluide caloporteur. Un tel mode de réalisation permet par exemple de diminuer la quantité de buée apparaissant sur les vitres en hiver notamment.

Le circuit de refroidissement peut être connecté thermiquement, en amont du moyen de couplage thermique, à un flux d'air sortant de l'habitacle. Le circuit de pompe à chaleur peut également comprendre un compresseur et être connecté thermiquement, en amont du compresseur, à un flux d'air sortant de l'habitacle.

Il est alors possible de récupérer une partie de l'énergie thermique de l'air sortant de l'habitacle, avant son rejet à l'extérieur du véhicule. On augmente alors le rendement du dispositif.

D'autres avantages et caractéristiques apparaîtront à l'examen de la description détaillée de deux modes de réalisation donnés à titre d'exemples non limitatifs et illustrés par les figures annexées sur lesquelles :
- la figure 1 illustre un premier mode de réalisation,
- la figure 2 illustre un deuxième mode de réalisation,
- la figure 3 illustre une première variante du premier mode de réalisation,
- la figure 4 illustre une deuxième variante du premier mode de réalisation, et
- la figure 5 illustre une variante du deuxième mode de réalisation.

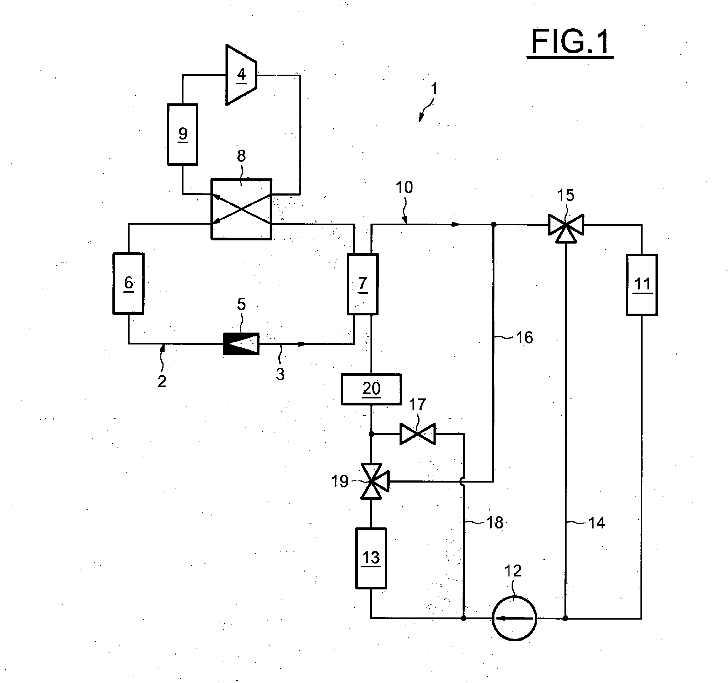

Sur la figure 1 est représenté un dispositif 1 de régulation de l'habitacle d'un véhicule automobile électrique ou hybride qui comprend un moteur électrique.

Le dispositif 1 de régulation permet d'assurer le confort des passagers ainsi que des fonctions réglementaires supplémentaires telle que le désembuage et le dégivrage des vitres.

Le dispositif 1 de régulation comprend une pompe à chaleur réversible 2 comportant un circuit principal 3 de fluide frigorigène, de type à compression, prélevant des calories d'une source froide pour les transférer au moins partiellement vers une source chaude. De manière classique, le fluide frigorigène se vaporise en enlevant de la chaleur à la source froide, provoquant un abaissement de la température de cette dernière. Un compresseur 4 aspire le fluide vaporisé et le refoule vers la source chaude où il se condense en refroidissant. Une vanne de détente 5 laisse passer le fluide frigorigène liquide vers la source froide en abaissant sa pression. Le sens de circulation du fluide frigorigène dans le circuit principal 3 est indiqué par une flèche sur la figure 1. En particulier, le circuit principal 3 relie respectivement un compresseur 4, un détendeur 5, un échangeur thermique 6 et un moyen de couplage thermique 7.

Le fluide frigorigène circulant dans le circuit principal 3 est de type classique. Le fluide frigorigène est choisi parmi un dérivé chloré et fluoré du méthane ou de l'éthane (fréon), un hydrocarbure, l'ammoniaque, le dioxyde de carbone, etc.

Le compresseur 4 peut être mécanique à cylindrée fixe ou pilotée, entraîné par le moteur électrique du véhicule, ou bien électrique avec son propre moteur électrique, ou bien encore hybride.

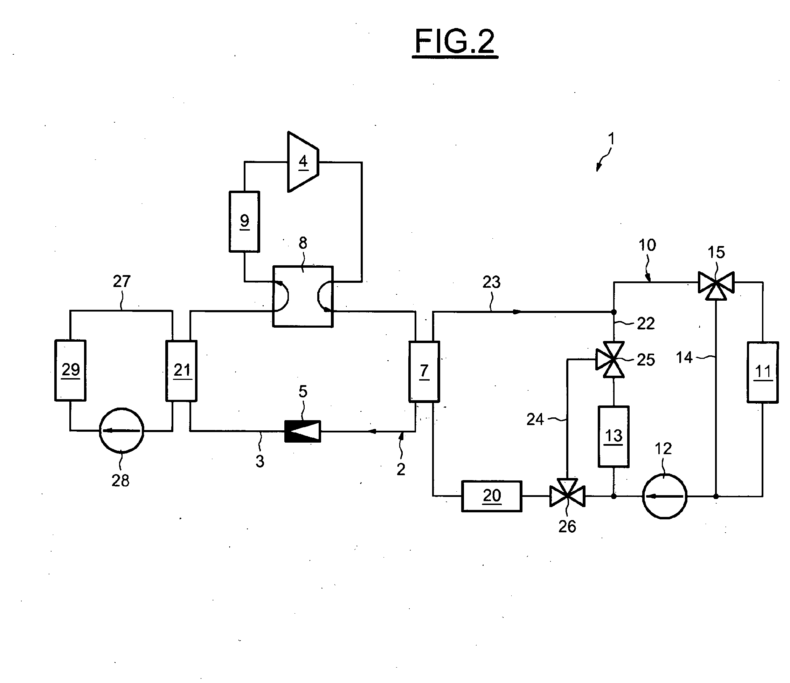

L'échangeur thermique 6 est en contact thermique avec l'habitacle. Il s'agit par exemple d'un échangeur avec l'air entrant dans l'habitacle du véhicule, comme représenté sur la figure 1. Un ventilateur peut être associé à l'échangeur 6 afin d'améliorer les échanges thermiques entre l'air et le fluide frigorigène circulant dans l'échangeur 6. L'échangeur 6 peut également comprendre un é'vaporateur et un échangeur aérotherme associé à un ventilateur (comme représenté sur la figure 2), afin notamment de limiter les phénomènes de buée sur les vitres du véhicule.

Le moyen de couplage thermique 7 est parcouru par le fluide frigorigène de la pompe à chaleur, et également par le fluide caloporteur d'un circuit de refroidissement. Le moyen de couplage thermique 7 permet de mettre en contact thermique les deux fluides afin de permettre les transferts de chaleur.

La pompe à chaleur 2 comprend également une vanne d'inversion 8. La vanne d'inversion 8 permet de changer le sens de circulation du fluide frigorigène dans le circuit principal 3. Ainsi, selon une première configuration de la vanne d'inversion 8 (représentée sur la figure 1), le fluide frigorigène peut traverser successivement le compresseur 4, l'échangeur thermique 6 qui joue alors le rôle de source chaude, le détendeur 5 et le moyen de couplage thermique 7 qui joue le rôle de source froide. Cette configuration permet d'apporter de la chaleur à l'échangeur 6 qui est en contact thermique avec l'habitacle : la pompe à chaleur 2 est dans un mode chauffage.

Selon la deuxième configuration de la vanne d'inversion 8 (représentée sur la figure 2), le fluide frigorigène peut traverser successivement le compresseur 4, le moyen de couplage thermique 7 qui joue alors le rôle de source chaude, le détendeur 5 et l'échangeur thermique 6 qui joue le rôle de source froide. Cette configuration permet de prélever de la chaleur à l'échangeur 6 qui est en contact thermique avec l'habitacle : la pompe à chaleur 2 est dans un mode climatisation.

On peut donc, par commande de la vanne d'inversion 8, chauffer ou climatiser l'habitacle, avec le même dispositif de régulation 1.

Afin d'augmenter la quantité de chaleur apportée à l'habitacle, il est également possible de monter des éléments d'augmentation de la température 9 sur le circuit principal 3, en amont du compresseur 5, afin de préchauffer le fluide frigorigène avant qu'il n'entre dans le compresseur 5. Ainsi, comme représenté sur la figure 1, l'élément d'augmentation de la température 9 peut être monté entre la vanne d'inversion 8 et le compresseur 4. Il est également possible de disposer l'élément 9 entre le moyen de couplage thermique 7 et la vanne d'inversion 8.

L'élément d'augmentation de la température 9 peut être un thermoplongeur, un élément CTP, ou bien encore un moyen de couplage thermique entre le fluide frigorigène et l'air sortant de l'habitacle. Dans ce dernier cas, il est possible de valoriser l'énergie de l'air chaud sortant de l'habitacle. Un tel moyen de couplage peut être par exemple un échangeur air/fluide frigorigène. Il est également possible d'utiliser une boucle, dite boucle courte, de fluide caloporteur comprenant une pompe, un échangeur air/fluide caloporteur et un échangeur fluide caloporteur/fluide frigorigène. En particulier, une boucle de fluide caloporteur permet une meilleure intégration dans le véhicule qu'un échangeur air/fluide frigorigène, notamment en terme de taille et d'acheminement des gaz vers le dispositif de régulation.

La pompe à chaleur 2 peut également comprendre un réservoir/séparateur (non représenté) monté en amont du compresseur 4, permettant d'alimenter le compresseur 4 avec du fluide frigorigène gazeux essentiellement.

Le dispositif 1 comprend également un circuit de refroidissement 10 de fluide caloporteur, transportant les calories entre les différents organes montés sur le circuit 10. Le circuit de refroidissement 10 comprend le moyen de couplage thermique 7 qui couple thermiquement le circuit principal 3 de fluide frigorigène avec le circuit de refroidissement 10. Le circuit de refroidissement 10 comporte un radiateur 11, une pompe 12 et un moyen d'échange thermique 13 avec des organes électriques.

Le liquide caloporteur du circuit de refroidissement 10 peut être un mélange d'eau et d'antigel, par exemple de l'éthylène glycol, avec éventuellement un agent anti-corrosion. Le sens de circulation du liquide caloporteur dans le circuit de refroidissement est indiqué par une flèche sur la figure 1.

Le radiateur 11 est monté par exemple en aval du moyen de couplage thermique 7, et peut être positionné, dans le véhicule, sur la face avant. Le radiateur 11 permet d'échanger des calories avec l'air extérieur du véhicule, et notamment permet de récupérer de l'énergie thermique pour la pompe à chaleur fonctionnant en mode chauffage. Le radiateur 11 peut être couplé avec un ventilateur afin d'augmenter les échanges thermiques. Le circuit de refroidissement 10 peut comprendre également une conduite de dérivation 14 montée en parallèle du radiateur 11. La conduite 14 a pour but, le cas échéant, de court-circuiter le radiateur afin d'éviter tout échange thermique avec l'air extérieur au véhicule lorsque la température du fluide caloporteur est par exemple supérieure à un seuil défini. La dérivation 14 peut être montée, à une première extrémité, par une vanne 15 comprenant une première voie connectée à la sortie du moyen de couplage thermique 7, une deuxième voie connectée à l'entrée du radiateur 11 et une troisième voie connectée à la conduite 14. La conduite 14 peut être piquée, par son autre extrémité, à la canalisation du circuit de refroidissement 10, entre le radiateur 11 et la pompe 12.

La pompe 12 est de préférence électrique. Elle peut également être mécanique, avec un entraînement par un moteur électrique. Elle est montée, par exemple, en amont du radiateur 11. Elle permet la mise en circulation du liquide caloporteur.

Le moyen d'échange thermique 13 est relié à des organes électriques du véhicule. Ces organes électriques comprennent en premier lieu le moteur électrique du véhicule, mais peuvent également comprendre d'autres moyens électriques nécessitant un refroidissement, par exemple une batterie, un onduleur, un chargeur, etc. Les différents organes électriques peuvent être montés en série dans le sens de circulation du fluide caloporteur dans le moyen d'échange thermique 13, ou bien en parallèle, selon l'énergie dégagée et la température de refroidissement requise par chacun.

Lorsque la pompe à chaleur 2 est utilisée pour chauffer l'habitacle, le fluide caloporteur du circuit de refroidissement 10 se réchauffe dans le moyen d'échange thermique, avec la chaleur dégagée par le moteur électrique et les autres organes électriques éventuels, puis traverse le moyen de couplage 7 qui fonctionne comme un évaporateur pour la pompe à chaleur. Le fluide caloporteur se refroidit donc dans le moyen de couplage 7 en libérant les calories récupérées dans le moyen d'échange thermique 13. Deux modes de fonctionnement sont alors possibles.

Si la puissance thermique générée par les organes électriques est suffisante pour assurer le confort de l'habitacle par l'intermédiaire de la pompe à chaleur 2, alors la vanne 15 est commandée en position de court-circuit du radiateur 11, c'est-à-dire que la deuxième voie est fermée. Le moyen de couplage thermique 7, utilisé comme évaporateur de la pompe à chaleur 2, permet d'assurer le refroidissement des composants électriques qui constituent la source chaude du circuit de refroidissement 10.

Si la puissance thermique générée par les organes électriques n'est pas suffisante pour assurer le confort de l'habitacle par l'intermédiaire de la pompe à chaleur 2, alors la deuxième voie de la vanne 15 est ouverte complètement ou partiellement. Le radiateur 11 sert alors de source chaude pour le fluide caloporteur, en recevant des calories de l'air extérieur dont la température est supérieure à celle du fluide caloporteur en sortie du moyen de couplage thermique 7. La chaleur transmise au fluide frigorigène de la pompe à chaleur 2 provient donc à la fois de l'air extérieur, via le radiateur 11, et des organes électriques du véhicule qui surchauffe le fluide caloporteur, via le moyen d'échange 13. Dans le même temps, les organes électriques restent refroidis à une température inférieure ou égale à celle de l'air extérieur.

La vanne 15 permet donc de contrôler les échanges thermiques entre le fluide caloporteur et l'air extérieur, en fonction de la demande de chauffage de l'habitacle par les passagers du véhicule et de l'énergie thermique dégagée par les organes électriques.

L'avantage du dispositif de régulation 1 est donc de permettre la valorisation des calories produites par les organes électriques du véhicule, pour le chauffage de l'habitacle. Ainsi, lorsqu'un élément CTP nécessite, par exemple, 6kW électrique pour produire 6kW thermique, la pompe à chaleur 2 telle que décrite ne nécessite que 2kW électrique pour transmettre 6kW thermique des organes électriques à l'air de l'habitacle.

Lorsque le fluide caloporteur traverse le radiateur 11, il est possible d'augmenter l'énergie thermique apportée à la pompe à chaleur 2 tout en maintenant les organes électriques à une température définie, en augmentant le débit de fluide caloporteur dans le moyen de couplage 7. Ainsi, le circuit de refroidissement 10 peut également comprendre une première dérivation 16, piquée sur le circuit de refroidissement, par une première extrémité, entre le moyen d'échange thermique 13 et le moyen de couplage 7, et par une deuxième extrémité, en aval du moyen de couplage 7 et en amont de la vanne 15.

Le circuit de refroidissement 10 peut également comprendre une deuxième conduite de dérivation 18, montée en parallèle du moyen d'échange 13. La deuxième conduite 18 est piquée, par une première extrémité, sur le circuit de refroidissement 10, en aval de la pompe 12 et, par une deuxième extrémité, sur le circuit de refroidissement 10 entre la première extrémité de la première conduite 16 et le moyen de couplage 7. La deuxième conduite 18 permet ainsi d'acheminer du fluide caloporteur issu du radiateur 11 au moyen de couplage 7, sans traverser préalablement le moyen d'échange 13.

La deuxième dérivation 18 peut comprendre une vanne 17, par exemple deux voies, commandant le débit de fluide caloporteur circulant dans la deuxième dérivation 18.

Le débit de la première dérivation 16 est par exemple contrôlé par une vanne 19 comprenant une première voie connectée à la sortie du moyen d'échange 13, une deuxième voie connectée à la deuxième extrémité de la deuxième dérivation 18 et une troisième voie connectée à la première dérivation 16.

La deuxième dérivation 18, en combinaison avec la première dérivation 16, permet d'acheminer le fluide caloporteur de manière à ce que le moyen d'échange 13 et le moyen de couplage 7 soient montés en série ou en parallèle dans le sens de circulation du fluide caloporteur. Ainsi, lorsque la troisième voie de la vanne 19 et la vanne 17 sont fermées, le fluide caloporteur traverse successivement le moyen d'échange thermique 13 et le moyen de couplage 7 qui sont montés alors en série.

En revanche, lorsque les première et troisième voies de la vanne 19 et la vanne 17 sont ouvertes, le fluide caloporteur traverse simultanément le moyen d'échange thermique 13 et le moyen de couplage 7 qui sont donc montés en parallèle.

La commande des vannes 17 et 19 est déterminée en fonction de la température du fluide caloporteur en entrée du moyen d'échange 13, et en fonction des besoins en énergie thermique de la pompe à chaleur. Ainsi, lorsque la pompe à chaleur est en mode chauffage de l'habitacle, les moyens 7 et 13 peuvent être montés en parallèle, en commandant les vannes 17 et 19, afin d'augmenter les échanges thermiques entre le moyen de couplage 7 et le radiateur 11.

Les conduites 16, 18 et les vannes 17, 19 constituent, pour le premier mode de réalisation, un moyen de distribution capable d'alimenter simultanément ou successivement, dans le sens de circulation du fluide caloporteur, le moyen d'échange thermique 13 et le moyen de couplage thermique 7.

Afin d'augmenter la quantité de chaleur apportée à l'habitacle, il est également possible de monter des éléments d'augmentation de la température 20 sur le circuit de refroidissement 10, en amont du moyen de couplage thermique 7. Ainsi, comme représenté sur la figure 1, l'élément d'augmentation de la température 20 peut être monté entre la deuxième extrémité de la première conduite de dérivation 16 et le moyen de couplage thermique 7.

L'élément d'augmentation de la température 20 peut être un thermoplongeur, un élément CTP, ou bien encore un moyen de couplage thermique entre le fluide frigorigène et l'air sortant de l'habitacle. Dans ce dernier cas, il est possible de valoriser l'énergie de l'air chaud sortant de l'habitacle. Un tel moyen de couplage peut être par exemple un échangeur air/fluide frigorigène. Il est également possible d'utiliser une boucle, dite boucle courte, de fluide caloporteur comprenant une pompe, un échangeur air/fluide caloporteur et un échangeur fluide caloporteur/fluide frigorigène. En particulier, une boucle de fluide caloporteur permet une meilleure intégration dans le véhicule qu'un échangeur air/fluide frigorigène, notamment en terme de taille et d'acheminement des gaz vers le dispositif de régulation.

Le circuit de refroidissement 10 peut également comprendre un bocal de dégazage (non représenté) monté en amont du radiateur 11, permettant de séparer le gaz du liquide de refroidissement.

Sur la figure 2 a été représenté un autre mode de réalisation de l'invention. Dans ce deuxième mode de réalisation, les moyens identiques au premier mode sont référencés avec les mêmes numéros.

Sur la figure 2, le dispositif de régulation de la température 1 a été représenté en mode climatisation. Ainsi, la vanne d'inversion 8 a été commandée de manière à ce que le fluide frigorigène traverse successivement le compresseur 4, le moyen de couplage thermique 7 qui joue alors le rôle de source chaude, le détendeur 5 et un deuxième moyen de couplage thermique 21 qui joue le rôle de source froide. Par ailleurs, les éléments d'augmentation de la température 9, 20 sont éteints.

Selon le deuxième mode de réalisation, le circuit de refroidissement 10 comprend une première branche, ou conduite, 22 sur laquelle est monté le moyen d'échange thermique 13 avec les organes électriques, et une deuxième branche, ou conduite, 23 sur laquelle est monté le moyen de couplage thermique 7.

Le circuit de refroidissement 10 comprend également une conduite de dérivation 24 piquée, par une première extrémité, sur la première branche 22, en aval du moyen d'échange thermique 13 et, par une deuxième extrémité, sur la deuxième branche 23, en amont du moyen de couplage 7. La circulation du fluide caloporteur dans la conduite de dérivation 24 peut être commandée par deux vannes trois voies 25 et 26 montées chacune à une extrémité de la conduite de dérivation 24. La première vanne 25 comprend une première voie connectée à la sortie du moyen d'échange thermique 13, une deuxième voie connectée à la vanne 15 et une troisième voie connectée à la conduite de dérivation 24. La deuxième vanne 26 comprend une première voie connectée à l'entrée du moyen d'échange thermique 7, une deuxième voie connectée à la sortie de la pompe 12 et une troisième voie connectée à la conduite de dérivation 24.

La conduite 24 et les vannes 25, 26 permettent d'acheminer le fluide caloporteur de manière à ce que le moyen d'échange 13 et le moyen de couplage 7 soient montés en série ou en parallèle dans le sens de circulation du fluide caloporteur. Ainsi, lorsque la troisième voie de la vanne 25 et la troisième voie de la vanne 26 sont fermées, le fluide caloporteur traverse simultanément le moyen d'échange thermique 13 et le moyen de couplage 7 qui sont donc montés en parallèle.

En revanche, lorsque la deuxième voie de la vanne 25 et la deuxième voie de la vanne 26 sont fermées, le fluide caloporteur traverse successivement le moyen d'échange thermique 13 et le moyen de couplage 7 qui sont montés alors en série.

La commande des vannes 25 et 26 est déterminée en fonction de la température du fluide caloporteur en sortie du moyen d'échange 13, et en fonction des besoins en énergie thermique de la pompe à chaleur. Ainsi, lorsque la pompe à chaleur est en mode climatisation de l'habitacle, les moyens 7 et 13 peuvent être montés en parallèle, en commandant les vannes 25 et 26, afin de limiter l'impact, sur le fonctionnement du moyen de couplage 7, de l'augmentation de la température du fluide caloporteur par le moyen d'échange 13.

La conduites 24 et les vannes 25, 26 constituent, pour le deuxième mode de réalisation, un moyen de distribution capable d'alimenter simultanément ou successivement, dans le sens de circulation du fluide caloporteur, le moyen d'échange thermique 13 et le moyen de couplage thermique 7.

Notamment, en mode climatisation, le moyen de couplage 7, dans lequel le fluide frigorigène se condense, permet de transférer l'énergie thermique du fluide frigorigène vers le fluide caloporteur. Le chauffage du fluide caloporteur, dans le moyen d'échange 13, par les organes électriques diminue les performances de la pompe à chaleur 2, et donc les performances de la climatisation.

Contrairement au mode chauffage du dispositif de régulation 1, le radiateur 11 permet, en mode climatisation, d'évacuer l'énergie thermique apportée au fluide caloporteur par le moyen d'échange 13 et par le moyen de couplage 7. La troisième voie de la vanne 15 est donc préférentiellement complètement fermée afin de permettre le plus d'échanges thermiques entre le fluide caloporteur et l'air extérieur. D'ailleurs, il est possible d'augmenter l'évacuation de l'énergie thermique dans le circuit de refroidissement 10 en augmentant par exemple la surface du radiateur 11 et l'ouverture d'air en face avant du véhicule, ou en ajoutant un radiateur de sous-refroidissement (non représenté) en parallèle du moyen d'échange 13.

Selon une alternative, le deuxième mode de réalisation comprend, au lieu de l'échangeur 6 avec l'air de l'habitacle du premier mode de réalisation, un deuxième moyen de couplage thermique 21 et une boucle 27, dite courte, comportant une pompe 28 et un échangeur aérotherme 29. La boucle, ou circuit de circulation, 27 permet de transférer l'énergie thermique de l'habitacle à la pompe à chaleur 2 sans utiliser un échangeur 6. La boucle 27 permet d'éviter l'apparition de buée sur le vitrage du véhicule lors du démarrage du système. En effet, cette buée est liée à la condensation de vapeur d'eau sur l'évaporateur durant les phases d'arrêt. L'utilisation de l'échangeur aérotherme 29 permet de limiter ce problème.

On a décrit deux modes de réalisation différents de l'invention. Ces modes de réalisation comprennent notamment des moyens alternatifs de certaines fonctions communes du dispositif de régulation. Cependant, bien que cela ne soit pas systématiquement décrit spécifiquement, ces moyens alternatifs s'appliquent aussi bien au premier qu'au deuxième mode de réalisation. Par exemple, la boucle 27 décrite dans le deuxième mode de réalisation peut être appliqué au premier mode de réalisation, en lieu et place de l'échangeur 6, et inversement.

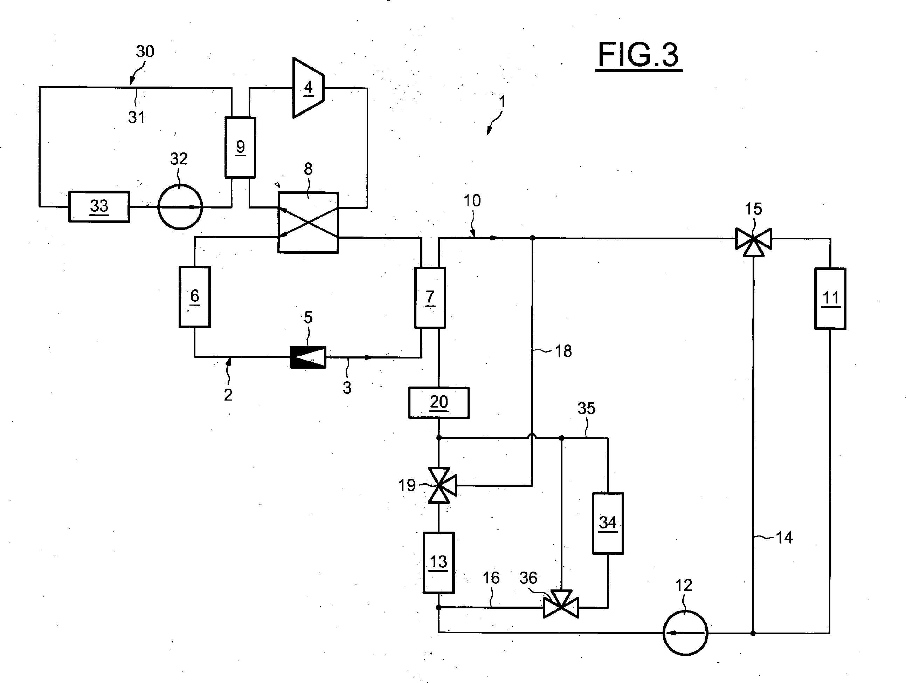

La figure 3 représente une première variante du premier mode de réalisation. Dans cette première variante du premier mode de réalisation, les moyens identiques au premier mode sont référencés avec les mêmes numéros.

Sur la figure 3, l'élément d'augmentation de la température 9 est un échangeur fluide caloporteur/fluide frigorigène, monté sur une boucle 30, dite boucle courte, de fluide caloporteur. La boucle 30 comprend également une conduite 31, une pompe 32 et un échangeur air/fluide caloporteur 33. En particulier, une boucle de fluide caloporteur permet une meilleure intégration dans le véhicule qu'un échangeur air/fluide frigorigène, notamment en terme de taille et d'acheminement des gaz vers le dispositif de régulation. L'échangeur air/fluide caloporteur 33 permet notamment de valoriser l'air sortant de l'habitacle et rejeté, par exemple, vers l'extérieur, en récupérant l'énergie thermique de cet air. On peut ainsi limiter les pertes thermiques de l'habitacle, et réutiliser ces calories pour chauffer l'air alimentant l'habitacle.

Par ailleurs, le dispositif 1 de la figure 3 comprend également un radiateur de sous-refroidissement 34. Le radiateur 34 est monté sur une conduite 35 montée en parallèle sur la conduite 16. Plus particulièrement, la conduite 35 est montée entre les deux extrémités de la conduite 16 avec, notamment une vanne trois voies 36 permettant de contrôler le débit de liquide de refroidissement circulant la conduite 35. La vanne trois voies 36 peut ainsi comprendre une première voie connectée à la première extrémité de la conduite 16, une deuxième voie connectée à la première extrémité de la conduite 35 et une troisième voie connectée à la deuxième extrémité de la conduite 16.

Le radiateur de sous-refroidissement 34 permet notamment, d'augmenter l'évacuation de l'énergie thermique dans le circuit de refroidissement 10, en plus du radiateur 11.

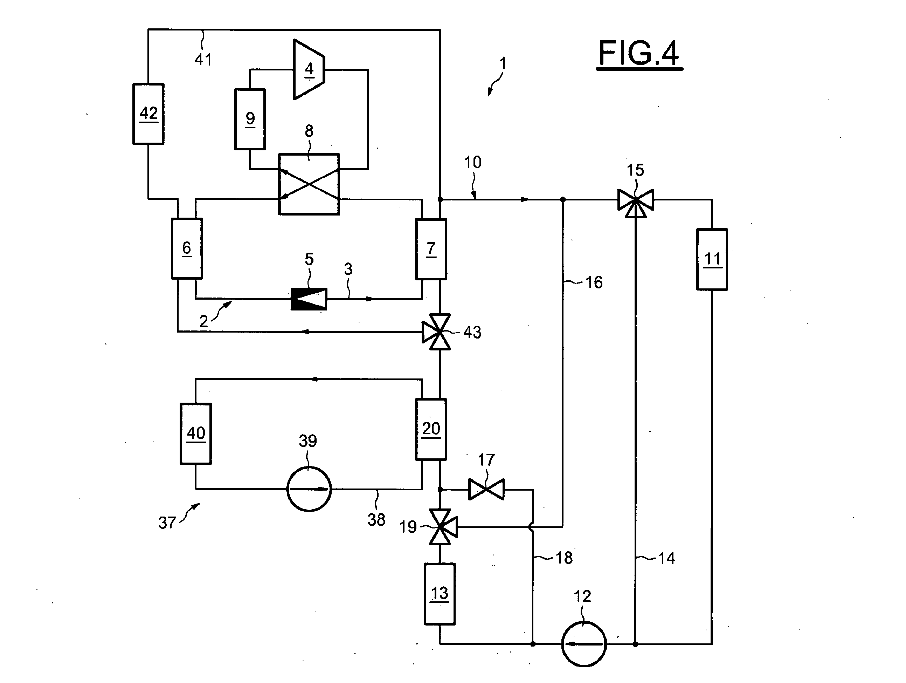

La figure 4 représente une deuxième variante du premier mode de réalisation. Dans cette deuxième variante du premier mode de réalisation, les moyens identiques au premier mode sont référencés avec les mêmes numéros.

Sur la figure 4, l'élément d'augmentation de la température 20 est un échangeur fluide caloporteur/fluide caloporteur, monté sur une boucle 37, dite boucle courte, de fluide caloporteur. La boucle 37 comprend également une conduite 38, une pompe 39 et un échangeur air/fluide caloporteur 40. L'échangeur air/fluide caloporteur 40 permet notamment de valoriser l'air sortant de l'habitacle et rejeté, par exemple, vers l'extérieur, en récupérant l'énergie thermique de cet air. On peut ainsi limiter les pertes thermiques de l'habitacle, et réutiliser ces calories pour chauffer l'air alimentant l'habitacle.

Par ailleurs, le dispositif 1 de la figure 4 comprend également une conduite de dérivation 41 piquée sur le circuit de refroidissement 10, par une première extrémité entre le moyen d'échange 13 et le moyen de couplage 7, et par une deuxième extrémité entre le moyen de couplage 7 et la vanne 15. La conduite de dérivation 41 comprend l'échangeur thermique 6, un échangeur aérotherme 42 monté en aval de l'échangeur thermique 6 et une vanne pilotée, par exemple une vanne trois voies 43, capable de commander le débit de liquide de refroidissement circulant dans cette conduite de dérivation 41. La vanne trois voies 43 peut ainsi comprendre une première voie connectée à la sortie de l'élément d'augmentation de la température 20, une deuxième voie connectée à la première extrémité de la conduite de dérivation 41 et une troisième voie connectée à l'entrée du moyen de couplage 7.

La conduite de dérivation permet d'éviter l'apparition de buée sur le vitrage du véhicule lors du démarrage du système. En effet, cette buée est liée à la condensation de vapeur d'eau sur l'évaporateur durant les phases d'arrêt. L'utilisation de l'échangeur aérotherme 42 permet de limiter ce problème.

En fonctionnement, par exemple en hiver, le dispositif peut être préconditionné, par exemple en faisant circuler le liquide de refroidissement dans les échangeurs 6 et 42, ainsi que dans un élément d'augmentation de la température, par exemple un élément CTP (non représenté). Durant ce préconditionnement, le liquide de refroidissement ne circule pas dans le radiateur 11 ni dans le moyen d'échange 13, mais dans les conduites 14 et 18, afin d'accélérer l'augmentation de la température du liquide de refroidissement par l'élément CTP. La température du liquide de refroidissement peut alors atteindre les 110°C.

Lors du démarrage à froid, les calories stockées dans le liquide de refroidissement peuvent alors être utilisées pour chauffer l'habitacle. En particulier, l'élément CTP est arrêté et les échanges thermiques avec l'habitacle sont augmentés, jusqu'à obtenir une température du liquide de refroidissement environ égale à 40°C. Par ailleurs, si les organes électriques ont besoin d'être refroidis, il est également possible d'utiliser les calories dégagées par les organes électriques pour chauffer l'habitacle. Dans ce cas, le liquide de refroidissement traverse le moyen 13 puis circule dans la conduite 41.

Lorsque la température du liquide de refroidissement est comprise entre celle des organes électriques et environ 40°C, la pompe à chaleur 2 est alors utilisée. Le liquide de refroidissement ne circule plus dans la conduite 41, mais dans le moyen de couplage 7 pour échanger de la chaleur avec le fluide frigorigène. L'habitacle est alors chauffé par l'échangeur thermique 6.

Lorsque la température du liquide de refroidissement est inférieure à celle des organes électriques, le liquide de refroidissement circule à la fois dans le moyen 13 et le moyen de couplage 7, afin de transporter les calories des organes électriques vers la pompe à chaleur 2. Par ailleurs, si la température de l'habitacle est supérieure à celle du liquide de refroidissement, celui-ci ne circule alors plus dans la conduite 41. Enfin, si les organes électriques dégagent trop de chaleur, le liquide de refroidissement peut alors circuler dans le radiateur 11, en plus du moyen de couplage 7, afin d'évacuer les calories fournies par le moyen 13.

Lorsque la température du liquide de refroidissement est inférieure à la température extérieure, il est aussi possible de faire circuler le liquide de refroidissement dans le radiateur 11, afin de récupérer des calories de l'extérieur pour chauffer l'habitacle.

Ainsi, grâce au dispositif 1, il est possible d'utiliser le liquide de refroidissement pour chauffer l'habitacle, en récupérant des calories d'éléments CTP, des organes électriques ou bien encore de l'air extérieur. Les différentes conduites et vannes permettent notamment une grande liberté dans la gestion des calories dans le circuit de refroidissement 10.

En été, il est également possible de commander le dispositif 1 de manière à exploiter au mieux les différentes sources de calories et de frigories. Ainsi, lorsque la température du liquide de refroidissement est comprise entre environ 15°C et la température extérieure, la pompe à chaleur 2 est utilisée. Le liquide de refroidissement ne circule pas dans le radiateur 11, mais dans les conduites 14 et 18. Si les organes électriques ont besoin d'être refroidis, il est aussi possible de faire circuler le liquide de refroidissement dans le moyen 13, notamment en commandant la vanne 19.

Lorsque la température du liquide de refroidissement est supérieure à la température extérieur, il est aussi possible de faire circuler le liquide de refroidissement dans le radiateur 11, afin d'évacuer des calories vers l'extérieur.

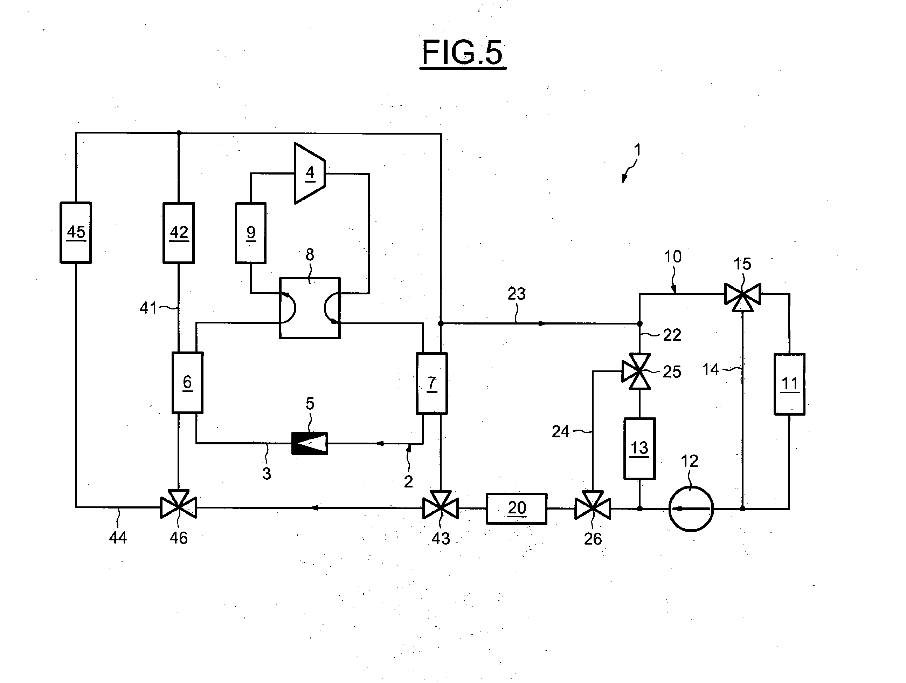

La figure 5 représente une variante du deuxième mode de réalisation. Dans cette variante du deuxième mode de réalisation, les moyens identiques au deuxième mode sont référencés avec les mêmes numéros.

Sur la figure 5, le dispositif 1 comprend également une conduite de dérivation 41 piquée sur le circuit de refroidissement 10, par une première extrémité entre le moyen d'échange 13 et le moyen de couplage 7, et par une deuxième extrémité entre le moyen de couplage 7 et la vanne 15. La conduite de dérivation 41 comprend l'échangeur thermique 6, un échangeur aérotherme 42 monté en aval du deuxième moyen de couplage 6 et une vanne pilotée, par exemple une vanne trois voies 43, capable de commander le débit de fluide caloporteur circulant dans cette conduite de dérivation 41. La vanne trois voies 43 peut ainsi comprendre une première voie connectée à la sortie de l'élément d'augmentation de la température 20, une deuxième voie connectée à la première extrémité de la conduite de dérivation 41 et une troisième voie connectée à l'entrée du moyen de couplage 7.

Le dispositif 1 de la figure 5 comprend également une conduite 44, piquée sur la conduite 41, en parallèle de l'échangeur thermique 6 et de l'échangeur aérotherme 42, et comprenant un échangeur aérotherme 45. La conduite 44 comprend une première extrémité entre la vanne 43 et l'échangeur thermique 6, et une deuxième extrémité l'échangeur aérotherme 42 et la vanne 15. En particulier, afin de contrôler le débit de liquide de refroidissement circulant dans la conduite 44, et notamment dans l'échangeur 45, une vanne trois voies 46 peut être utilisée. La vanne 46 peut ainsi comprendre une première voie connectée à la deuxième voie de la vanne 43, une deuxième voie connectée à l'échangeur thermique 6 et une troisième voie connectée à la premier extrémité de la conduite 44.

## Revendications

1. Dispositif (1) de régulation thermique de l'habitacle d'un véhicule automobile entraîné notamment par un moteur électrique, le dispositif comprenant :
- un circuit de pompe à chaleur réversible (2),
- un circuit de refroidissement (10) avec circulation d'un fluide caloporteur, comportant un moyen d'échange thermique (13) avec le moteur électrique, et
- un moyen de couplage thermique (7) entre le circuit de pompe à chaleur (2) et le circuit de refroidissement (10), et
le circuit de pompe à chaleur réversible (2) est connecté thermiquement à un échangeur (6, 29) avec un flux d'air destiné à entrer dans l'habitacle, **caractérisé en ce que** le circuit de refroidissement (10) comprend également un moyen le distribution capable d'alimenter simultanément, soit en parallèle, et successivement, soit en série, dans le sens de circulation du fluide caloporteur, le moyen d'échange thermique (13) et le moyen de couplage thermique (7).

2. Dispositif selon la revendication 1 comprenant au moins une conduite (41, 44) montée sur le circuit de refroidissement (10), en parallèle du moyen de couplage (7) et comprenant au moins un échangeur thermique (6, 42, 45) avec le flux d'air destiné à entrer dans l'habitacle.

3. Dispositif selon la revendication 1 ou 2 dans lequel le moyen d'échange thermique (13) est monté sur une conduite (22) reliée au circuit de refroidissement par un premier branchement en amont du moyen de couplage thermique (7) et par un deuxième branchement en aval du moyen de couplage thermique (7), et dans lequel le moyen de distribution comprend une conduite de dérivation (24) montée, notamment par deux vannes trois voies (25, 26), d'une part entre le moyen d'échange thermique (13) et le deuxième branchement, et d'autre part entre le premier branchement et le moyen de couplage thermique (7).

4. Dispositif selon la revendication 3 dans lequel le moyen de distribution comprend :
- une première vanne (25) munie d'une première voie raccordée à la sortie du moyen d'échange thermique (13), une deuxième voie raccordée au deuxième branchement et une troisième voie raccordée à la conduite de dérivation (24), et
- une deuxième vanne (26) munie d'une première voie raccordée à l'entrée du moyen de couplage thermique (7), une deuxième voie raccordée au premier branchement et une troisième voie raccordée à la conduite de dérivation (24).

5. Dispositif selon la revendication 1 ou 2 dans lequel le moyen d'échange thermique (13) est monté en amont du moyen de couplage thermique (7), et dans lequel le moyen de distribution comprend une première conduite de dérivation (16) montée sur le circuit de refroidissement par un premier branchement en amont du moyen de couplage thermique (7) et par un deuxième branchement en aval du moyen de couplage thermique (7).

6. Dispositif selon la revendication 5 dans lequel le moyen de distribution comprend également une deuxième conduite de dérivation (18) montée sur le circuit de refroidissement par un premier branchement en amont du moyen d'échange thermique (13), et par un deuxième branchement entre le premier branchement de la première conduite (16) et le moyen de couplage thermique (7).

7. Dispositif selon la revendication 6 dans lequel le moyen de distribution comprend :
- une première vanne deux voies (17) montée sur la première conduite de dérivation (16), et
- une deuxième vanne (19) munie d'une première voie raccordée à la sortie du moyen d'échange thermique (13), une deuxième voie raccordée à l'entrée du moyen de couplage (7) et une troisième voie raccordée à la deuxième conduite de dérivation (18).

8. Dispositif selon l'une des revendications précédentes dans lequel le circuit de pompe à chaleur réversible comprend un échangeur avec le flux d'air destiné à entrer dans l'habitacle.

9. Dispositif selon l'une des revendications 1 à 7 dans lequel le circuit de pompe à chaleur réversible (2) comprend un deuxième moyen de couplage thermique (21) avec un circuit de circulation (27) comportant un échangeur (29) avec le flux d'air destiné à entrer dans l'habitacle.

10. Dispositif selon l'une des revendications précédentes dans lequel le circuit de refroidissement (10) est connecté thermiquement, en amont du moyen de couplage thermique (7), à un flux d'air sortant de l'habitacle.

11. Dispositif selon l'une des revendications précédentes dans lequel le circuit de pompe à chaleur (2) comprend un compresseur (4) et est connecté thermiquement, en amont du compresseur (4), à un flux d'air sortant de l'habitacle.

## Patentansprüche

1. Vorrichtung (1) zur Wärmeregelung des Innenraums eines Kraftfahrzeugs, die insbesondere von einem Elektromotor angetrieben wird, wobei die Vorrichtung enthält:
- einen reversiblen Wärmepumpenkreislauf (2),
- einen Kühlkreislauf (10) mit Zirkulation eines Wärmeträgerfluids, der eine Wärmeaustauscheinrichtung (13) mit dem Elektromotor aufweist, und
- eine Wärmekopplungseinrichtung (7) zwischen dem Wärmepumpenkreislauf (2) und dem Kühlkreislauf (10),
und der reversible Wärmepumpenkreislauf (2) mit einem Tauscher (6, 29) mit einem für den Eintritt in den Innenraum bestimmten Luftstrom wärmegekoppelt ist,
**dadurch gekennzeichnet, dass** der Kühlkreislauf (10) ebenfalls eine Verteilungseinrichtung enthält, die in der Lage ist, gleichzeitig, d.h. parallel, und nacheinander, d.h. in Reihe, in der Zirkulationsrichtung des Wärmeträgerfluids, die Wärmeaustauscheinrichtung (13) und die Wärmekopplungseinrichtung (7) zu versorgen.

2. Vorrichtung nach Anspruch 1, die mindestens eine Leitung (41, 44) enthält, die auf den Kühlkreislauf (10) parallel zur Kopplungseinrichtung (7) montiert ist und mindestens einen Wärmetauscher (6, 42, 45) mit dem für den Eintritt in den Innenraum bestimmten Luftstrom enthält.

3. Vorrichtung nach Anspruch 1 oder 2, wobei die Wärmeaustauscheinrichtung (13) auf eine Leitung (22) montiert ist, die mit dem Kühlkreislauf durch einen ersten Anschluss stromaufwärts vor der Wärmekopplungseinrichtung (7) und durch einen zweiten Anschluss stromabwärts hinter der Wärmekopplungseinrichtung (7) verbunden ist, und wobei die Verteilungseinrichtung eine Abzweigleitung (24) enthält, die insbesondere durch zwei Dreiwegeventile (25, 26) einerseits zwischen der Wärmeaustauscheinrichtung (13) und dem zweiten Anschluss und andererseits zwischen dem ersten Anschluss und der Wärmekopplungseinrichtung (7) montiert ist.

4. Vorrichtung nach Anspruch 3, wobei die Verteilungseinrichtung enthält:
- ein erstes Ventil (25), das mit einem ersten Weg, der an den Ausgang der Wärmeaustauscheinrichtung (13) angeschlossen ist, einem zweiten Weg, der an den zweiten Anschluss angeschlossen ist, und einem dritten Weg versehen ist, der an die Abzweigleitung (24) angeschlossen ist, und
- ein zweites Ventil (26), das mit einem ersten Weg, der an den Eingang der Wärmekopplungseinrichtung (7) angeschlossen ist, einem zweiten Weg, der an den ersten Anschluss angeschlossen ist, und einem dritten Weg versehen ist, der an die Abzweigleitung (24) angeschlossen ist.

5. Vorrichtung nach Anspruch 1 oder 2, wobei die Wärmeaustauscheinrichtung (13) stromaufwärts vor der Wärmekopplungseinrichtung (7) montiert ist, und wobei die Verteilungseinrichtung eine erste Abzweigleitung (16) enthält, die auf den Kühlkreislauf durch einen ersten Anschluss stromaufwärts vor der Wärmekopplungseinrichtung (7) und durch einen zweiten Anschluss stromabwärts hinter der Wärmekopplungseinrichtung (7) montiert ist.

6. Vorrichtung nach Anspruch 5, wobei die Verteilungseinrichtung ebenfalls eine zweite Abzweigleitung (18) enthält, die auf den Kühlkreislauf durch einen ersten Anschluss stromaufwärts vor der Wärmeaustauscheinrichtung (13) und durch einen zweiten Anschluss zwischen dem ersten Anschluss der ersten Leitung (16) und der Wärmekopplungseinrichtung (7) montiert ist.

7. Vorrichtung nach Anspruch 6, wobei die Verteilungseinrichtung enthält:
- ein erstes Zweiwegeventil (17), das auf die erste Abzweigleitung (16) montiert ist, und
- ein zweites Ventil (19), das mit einem ersten Weg, der an den Ausgang der Wärmeaustauscheinrichtung (13) angeschlossen ist, einem zweiten Weg, der an den Eingang der Kopplungseinrichtung (7) angeschlossen ist, und einem dritten Weg versehen ist, der an die zweite Abzweigleitung (18) angeschlossen ist.

8. Vorrichtung nach einem der vorhergehenden Ansprüche, wobei der reversible Wärmepumpenkreislauf einen Tauscher mit dem für den Eintritt in den Innenraum bestimmten Luftstrom enthält.

9. Vorrichtung nach einem der Ansprüche 1 bis 7, wobei der reversible Wärmepumpenkreislauf (2) eine zweite Wärmekopplungseinrichtung (21) mit einem Zirkulationskreislauf (27) enthält, der einen Tauscher (29) mit dem für den Eintritt in den Innenraum bestimmten Luftstrom aufweist.

10. Vorrichtung nach einem der vorhergehenden Ansprüche, wobei der Kühlkreislauf (10) stromaufwärts vor der Wärmekopplungseinrichtung (7) mit einem aus dem Innenraum austretenden Luftstrom wärmegekoppelt ist.

11. Vorrichtung nach einem der vorhergehenden Ansprüche, wobei der Wärmepumpenkreislauf (2) einen Kompressor (4) enthält und stromaufwärts vor dem Kompressor (4) mit einem aus dem Innenraum austretenden Luftstrom wärmegekoppelt ist.

## Claims

1. Device (1) for controlling the temperature of the passenger compartment of a motor vehicle driven in particular by an electric motor, the device comprising:
- a reversible heat pump circuit (2),
- a cooling circuit (10) through which a heat-transfer fluid flows and which comprises a means (13) for heat exchange with the electric motor, and
- a thermal coupling means (7) between the heat pump circuit (2) and the cooling circuit (10), and
the reversible heat pump circuit (2) is thermally connected to an exchanger (6, 29) with an air flow intended to enter the passenger compartment, **characterized in that** the cooling circuit (10) also comprises a distribution means capable of supplying the heat exchange means (13) and the thermal coupling means (7) simultaneously, i.e. in parallel, and successively, i.e. in series.

2. Device according to Claim 1 comprising at least one pipe (41, 44) mounted on the cooling circuit (10), in parallel with the coupling means (7), and comprising at least one heat exchanger (6, 42, 45) with the air flow intended to enter the passenger compartment.

3. Device according to Claim 1 or 2, in which the heat exchange means (13) is mounted on a pipe (22) connected to the cooling circuit by a first connection upstream of the thermal coupling means (7) and by a second connection downstream of the thermal coupling means (7), and in which the distribution means comprises a bypass pipe (24) mounted, in particular by two three-way valves (25, 26), on the one hand between the heat exchange means (13) and the second connection, and on the other hand between the first connection and the thermal coupling means (7).

4. Device according to Claim 3, in which the distribution means comprises:
- a first valve (25) provided with a first way connected to the output of the heat exchange means (13), a second way connected to the second connection and a third way connected to the bypass pipe (24), and
- a second valve (26) provided with a first way connected to the input of the thermal coupling means (7), a second way connected to the first connection and a third way connected to the bypass pipe (24).

5. Device according to Claim 1 or 2, in which the heat exchange means (13) is mounted upstream of the thermal coupling means (7), and in which the distribution means comprises a first bypass pipe (16) mounted on the cooling circuit by a first connection upstream of the thermal coupling means (7) and by a second connection downstream of the thermal coupling means (7).

6. Device according to Claim 5, in which the distribution means also comprises a second bypass pipe (18) mounted on the cooling circuit by a first connection upstream of the heat exchange means (13), and by a second connection between the first connection of the first pipe (16) and the thermal coupling means (7).

7. Device according to Claim 6, in which the distribution means comprises:
- a first three-way valve (17) mounted on the first bypass pipe (16), and
- a second valve (19) provided with a first way connected to the output of the heat exchange means (13), a second way connected to the input of the coupling means (7) and a third way connected to the second bypass pipe (18).

8. Device according to one of the preceding claims, in which the reversible heat pump circuit comprises an exchanger with the air flow intended to enter the passenger compartment.

9. Device according to one of Claims 1 to 7, in which the reversible heat pump circuit (2) comprises a second thermal coupling means (21) with a flow circuit (27) comprising an exchanger (29) with the air flow intended to enter the passenger compartment.

10. Device according to one of the preceding claims, in which the cooling circuit (10) is thermally connected, upstream of the thermal coupling means (7), to an air flow leaving the passenger compartment.

11. Device according to one of the preceding claims, in which the heat pump circuit (2) comprises a compressor (4) and is thermally connected, upstream of the compressor (4), to an air flow leaving the passenger compartment.
